# EUROPÄISCHE PATENTANMELDUNG

(11) **EP 1 069 717 A2**
(43) Veröffentlichungstag der Anmeldung: **17.01.2001**
(21) Anmeldenummer: 00440199.8
(22) Anmeldetag: 30.06.2000
(51) Int. Cl.: H04J 3/16, H04J 14/02

(54) **Verfahren zum Übertragen eines verketteten Signals**

(30) Priorität: 13.07.1999 DE 19932579
(71) Anmelder: ALCATEL, 75008 Paris (FR)
(72) Erfinder: Turban, Karl-Albert, 71522 Leonberg-Höfingen (DE); Weiss, Bernd X., Dr., 70825 Korntal (DE)
(74) Vertreter: Menzietti, Domenico, Dipl.-Ing

(57) **Zusammenfassung**

Die Erfindung schlägt ein Verfahren zum Übertragen eines verketteten Signals aus mindestens zwei Teilsignalen über ein optisches Netzwerk, das mindestens drei Netzelemente 1, 2, 3, 7, 8, 9, 10 beinhaltet, vor, bei dem mindestens zwei Teilsignale auf mindestens zwei unterschiedlichen Wellenlängen übertragen werden, und bei dem eine Zuweisung der Teilsignale zu den Wellenlängen für jeden Abschnitt zwischen zwei Netzelementen 1, 2, 3, 7, 8, 9, 10 derart erfolgt, daß die Laufzeitunterschiede zwischen den Teilsignalen für einen vorbestimmten Empfangsort minimiert werden. Es kann auch dann verkettete Übertragungskapazität allokiert werden, wenn diese auf einer Wellenlänge nicht mehr zusammenhängend verfügbar ist.

## Beschreibung

Die Erfindung bezieht sich auf ein Verfahren zum Übertragen eines verketteten Signals aus mindestens zwei Teilsignalen über ein optisches Netzwerk, das mindestens drei Netzelemente beinhaltet.

In digitalen Netzwerken werden Signale zumeist in Form von Datenpaketen von einer Sendeeinheit zu einer Empfangseinheit oder mehreren Empfangseinheiten übertragen. Signale, die von ihrem Datenvolumen größer sind als ein Datenpaket werden auf verschiedene Datenpakete aufgeteilt, die zeitlich nacheinander übertragen werden und in der Empfangseinheit wieder zusammengesetzt werden. Kontinuierliche Signale, wie beispielsweise analoge Fernsprechsignale oder Fernsehsignale werden in Teilsignale aufgeteilt, digitalisiert und in Form aneinandergereihter Datenpakete übertragen. Wird Zeitmultiplex verwendet können Signale unterschiedlicher Quellen gemeinsam über das Netzwerk übertragen werden, auch gleichzeitig zu unterschiedlichen Empfangseinheiten.

In SDH-Netzwerken, SDH=Synchrone Digitale Hierarchie, werden für die Teilsignale u.a. sog. VC4 Container verwendet. Mehrere aneinandergereihte VC4 Container enthalten dann das Gesamtsignal.

Zunehmend werden für die Übertragung von SDH-Signalen sog. WDM-Netze eingesetzt, WDM=Wavelength Division Multiplex. Ein WDM-Netz ist ein optisches Netzwerk, das mindestens zwei Wellenlängen für die Übertragung von Signalen bereitstellt. Ein Verfahren ein breitbandiges Signal in mehreren logisch verketteten VC4 Containern zu übertragen besteht darin, unter Verwendung von nur einer Wellenlänge die einzelnen VC4 Container, d.h. die einzelnen Teilsignale zeitlich nacheinander und ineinander geschachtelt zu übertragen, so wie es bereits aus den SDH-Standards für elektrische SDH-Signale bekannt ist. Ein weiteres Signal aus mehreren VC4 Containern kann gleichzeitig auf einer anderen Wellenlänge übertragen werden.

Werden die einzelnen Teilsignale eines Signals zeitlich nacheinander gesendet wird in heute verabschiedeten Standards von einer kontinuierlichen Verkettung, der sog. contiguous concatenation gesprochen.

Ein weiteres Verfahren ein Signal aus mehreren VC4 Containern zu übertragen besteht darin, eine logische Verkettung einzuführen, d.h. die einzelnen Container gleichzeitig mit individuellem Overhead und möglicherweise unter Verwendung mehrerer, unterschiedlicher Wellenlängen zu übertragen. In diesem Fall wird dann von einer virtuellen Verkettung, der sog. virtual concatenation gesprochen. Mittels virtueller Verkettung kann die Bitrate in kleineren Schritten den Kundenanforderungen angepaßt werden. Die Container können beispielsweise beliebig über einen optischen Multiplexer verteilt werden. Die verfügbare Übertragungskapazität kann optimal belegt werden. Die Zuweisung der Teilsignale zu den Wellenlängen erfolgt in der Sendeinrichtung am Sendeort und wird über die gesamte Übertragungsstrecke bis zum vorgegebenen Empfangsort beibehalten. Ein Nachteil der virtuellen Verkettung besteht allerdings darin, daß es auf Grund der für unterschiedliche Wellenlängen bestehenden unterschiedlichen Ausbreitungsgeschwindigkeiten zu unerwünscht und zum Teil auch unzulässig großen Laufzeitunterschieden für die einzelnen Teilsignale kommen kann. Bei Übertragungen über große Entfernungen, z.B. bei weltweiten Verbindungen können die Laufzeitunterschiede zwischen den Teilsignalen so groß sein, z.B. 70µs, daß die Reihenfolge der gesendeten Teilsignale nicht mehr mit der Reihenfolge der empfangenen Teilsignale übereinstimmt.

Eine Möglichkeit dieses Problem zu umgehen besteht darin, virtuelle Verkettung nicht zu verwenden oder auf kurze Entfernungen zu beschränken. Eine weitere Möglichkeit sieht Zwischenspeicher in Relaisstationen vor. Jeder Zwischenspeicher führt zu zusätzlichen Laufzeitverzögerungen und erfordert eine zusätzliche Steuereinrichtung zur Detektion der Teilsignale und zur Wiederherstellung der richtigen Reihenfolge.

Eine Aufgabe der Erfindung ist daher, ein Verfahren oder eine Einrichtung zum Übertragen eines verketteten Signals bereitzustellen, das bzw. die die oben genannten Nachteile nicht aufweist.

Gelöst wird diese Aufgabe durch ein Verfahren nach Anspruch 1, ein Netzelement nach Anspruch 2 und ein Netzwerk nach Anspruch 5.

Die Übertragung des verketteten Signals erfolgt mit einer sich während der Übertragung ändernden Zuweisung der Teilsignale zu den Wellenlängen. Auf diese Art und Weise wird erreicht, daß sich eine mittlere Ausbreitungsgeschwindigkeit für die einzelnen Teilsignale ausbildet. Das bedeutet, daß jedes Teilsignal betrachtet über die gesamte Übertragungsstrecke in etwa die gleiche Laufzeitverzögerung erfährt, so daß die Laufzeitunterschiede zwischen einzelnen Teilsignalen minimiert, im günstigsten Fall sogar kompensiert werden.

Dazu wird die Übertragungsstrecke z.B. in Teilstrecken aufgeteilt. Ändert sich der Laufzeitunterschied zwischen den Teilsignalen bei der Übertragung so stark, daß er einen vorgegebenen Wert überschreitet, so wird auf bestimmten Teilstrecken die Zuweisung der Teilsignale zu den Wellenlängen derart geändert, daß das die niedrigste Verzögerung aufweisende Teilsignal derjenigen Wellenlänge zugewiesen wird, die die niedrigste

Ausbreitungsgeschwindigkeit aufweist. Auf den ersten Teilstrecken schnell übertragene Teilsignale werden somit auf den nachfolgenden Teilstrecken verlangsamt übertragen. Auf den ersten Teilstrecken langsam übertragene Teilsignale werden auf den nachfolgenden Teilstrecken auf einer Wellenlänge übertragen, die eine höhere Ausbreitungsgeschwindigkeit aufweist. Über die gesamte Übertragungsstrecke betrachtet können Änderungen der Zuweisungen der Teilsignale zu den Wellenlängen mehrfach durchgeführt werden. Z.B. wird ein Teilsignal auf den ersten drei Teilstrecken auf einer Wellenlängen mit einer hohen Ausbreitungsgeschwindigkeit übertragen, auf der vierten und fünften Teilstrecke auf einer Wellenlänge mit einer niedrigen Ausbreitungsgeschwindigkeit, auf der sechsten Teilstrecke auf einer Wellenlänge mit einer sehr hohen Ausbreitungsgeschwindigkeit und auf der siebten, achten und neunten Teilstrecken auf einer Wellenlänge mit einer niedrigen Ausbreitungsgeschwindigkeit.

Auf diese Art und Weise werden insbesondere für lange Übertragungsstrecken die Laufzeitunterschiede minimiert und im Idealfall kompensiert.

Zudem können Verzögerungen und Laufzeitunterschiede in einem zentralen Netzwerkmanagement registriert und analysiert werden. Das Netzwerkmanagement kann auch die Steuerung der Zuweisungen übernehmen.

Durch die Verteilung einzelner Signale auf mehrere Wellenlängen können Blockierungen umgangen werden.

Die einzelnen VC4 der virtual concatenation können über mehrere Wellenlängen verteilt werden. Falls nicht genug Kapazität auf einer Wellenlänge verfügbar ist, können die einzelnen VC4 über mehrere Wellenlängen sinnvoll und kosteneffektiv verteilt werden. Bei Verwendung von mehreren Wellenlängen können die einzelnen Wellenlängen bis zu 100% ausgenutzt werden bevor weitere Wellenlängen verwendet werden, so daß keine Leerkapazitäten übrig bleiben.

Es kann auch dann verkettete Übertragungskapazität allokiert werden, wenn diese auf einer Wellenlänge nicht mehr zusammenhängend verfügbar ist.

Vorteilhafte Ausgestaltungen der Erfindung sind den abhängigen Ansprüchen zu entnehmen.

Im folgenden werden zwei Ausführungsbeispiele der Erfindung unter Zuhilfenahme von zwei Figuren erläutert. Es zeigen:
- Fig. 1: eine schematische Darstellung eines ersten erfindungsgemäßen Netzwerks und
- Fig. 2: eine schematische Darstellung eines zweiten erfindungsgemäßen Netzwerks.

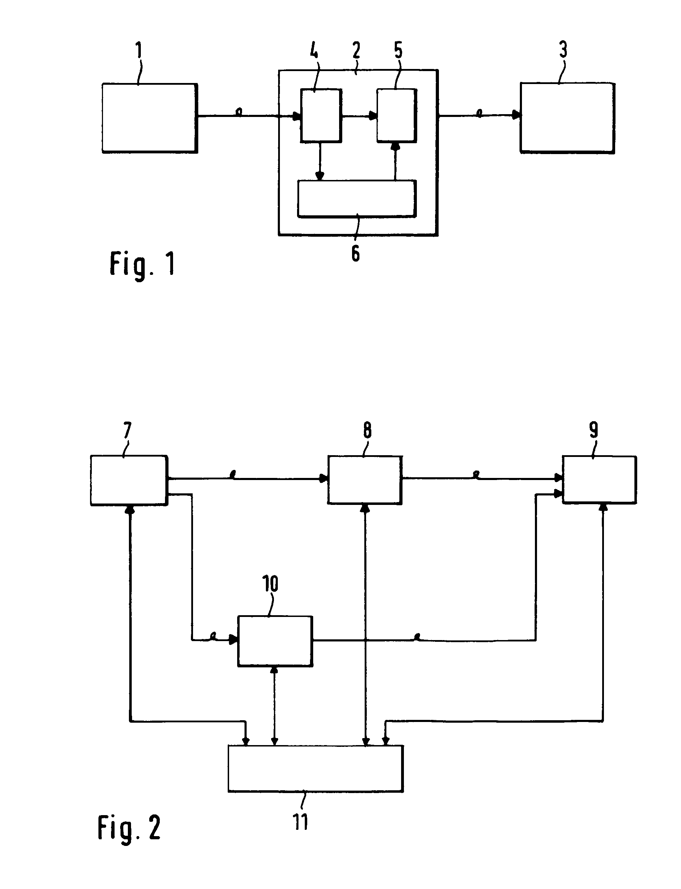

Das erste Ausführungsbeispiel wird nun unter Zuhilfenahme von Fig. 1 erläutert. Fig. 1 zeigt ein ersten erfindungsgemäßes Netzwerk.

Das Netzwerk beinhaltet drei Netzelemente 1, 2, 3, die über optische Leitungen miteinander verbunden sind.

Netzelement 1 ist als Zentrale ausgebildet. Die Zentrale dient der Aussendung von Signalen und ist beispielsweise als optischer Multiplexer ausgebildet. Signale verschiedener Quellen werden gemultiplext und gemeinsam über eine optische Glasfaserleitung zu Netzelement 2 übertragen. Ein Signal aus mehreren Teilsignalen wird mit virtueller Verkettung auf mehrere Wellenlängen verteilt. Beispielsweise sind vier Wellenlängen vorgesehen. Ein Signal besteht beispielsweise aus vier aneinandergereihten Teilsignalen. Die Teilsignale sind beispielsweise als VC4 Container ausgebildet. Die Rahmenstruktur entspricht der SDH-Struktur. Das erste Teilsignal wird der ersten Wellenlänge zugewiesen. Das zweite Teilsignal wird der zweiten Wellenlänge zugewiesen. Das dritte Teilsignal wird der dritten Wellenlänge zugewiesen. Das vierte Teilsignal wird der vierten Wellenlänge zugewiesen. Die erste Wellenlänge hat beispielsweise die höchste Ausbreitungsgeschwindigkeit und die vierte Wellenlänge die niedrigste.

Netzelement 2 ist als Cross-Connect oder als Add-Drop-Multiplexer ausgebildet. Netzelement 2 dient als Relaisstation zwischen Netzelement 1 und Netzelement 3.

Netzelement 2 beinhaltet eine Empfangseinheit 4 zum Empfang von mindestens zwei Teilsignalen eines verketteten Signals auf mindestens zwei Wellenlängen, ferner eine Meßeinheit 6 zur Messung der Laufzeitunterschiede zwischen den Teilsignalen des empfangenen, verketteten Signals sowie eine Sendeeinheit 5 zur Aussendung des empfangenen, verketteten Signals. Die Sendeeinheit ist geeignet, vor der Aussendung eine Änderung der Zuweisung der Wellenlängen zu den Teilsignalen vorzunehmen, für den Fall, daß mindestens ein gemessener Laufzeitunterschied eine vorgegebene Schwelle überschreitet.

Die Empfangseinheit 4 beinhaltet beispielsweise einen optischen Demultiplexer. Das von Netzelement 1 ausgesendete erste Teilsignal wird auf der ersten Wellenlänge empfangen, das zweite Teilsignal auf der zweiten Wellenlänge, etc. Die empfangenen Teilsignale werden optisch/elektrisch umgesetzt. Diejenigen Signale, die zur Weiterleitung bestimmt sind werden der Sendeeinheit 5 zugeführt. Die verbleibenden Signale werden dem empfangenen Datenstrom entnommen und weiterverarbeitet. Der Meßeinheit 6 werden Informationen über den Empfangszeitpunkt einzelner Teilsignale übermittelt. Z.B. Zeitpunkt x gleich Eintreffen vom ersten Teilsignal des ersten Signals, Zeitpunkt x+1 gleich eintreffen vom zweiten Teilsignal des ersten Signals, etc.

Die Meßeinheit 6 beinhaltet beispielsweise einen Schwellwertdetektor. Die Meßeinheit 6 mißt alle Laufzeitunterschiede zwischen den Teilsignalen eines Signals. Teilsignale, die auf unterschiedlichen Wellenlängen übertragen werden, werden auf Grund chromatischer Dispersion mit unterschiedlichen Geschwindigkeiten über die Teilstrecke Netzelement 1 Netzelement 2 übertragen. Es ergeben sich dadurch Laufzeitunterschiede zwischen den einzelnen Teilsignalen. Werden die Laufzeitunterschiede zu groß, laufen den einzelnen Teilsignale also zu sehr auseinander, erfolgt eine Korrektur. Sobald die gemessenen Laufzeitunterschiede eine vorgegebenen Schwellwert übersteigen, wird die Zuweisung der Teilsignale zu den Wellenlängen geändert. Die Meßeinheit 6 sendet der Sendeeinheit 5 ein Steuersignal mit dem Inhalt, daß die Zuweisung für ein bestimmtes Signal geändert werden muß, ggf. mit einer Vorgabe welches Teilsignal welcher Wellenlänge zugewiesen werden soll.

In der Sendeeinheit 5, die z.B. einen optischen Multiplexer beinhaltet, findet nun vor der Aussendung und bei der elektrisch/optischen Umsetzung eine Änderung der Zuweisung der Teilsignale zu den Wellenlängen statt. Z.B. wird auf Grund einer detektierten Schwellwertüberschreitung dem ersten Teilsignal für die Teilstrecke Netzelement 2 Netzelement 3 die vierte Wellenlänge zugewiesen, dem zweiten Teilsignal des gleichen Signals die dritte Wellenlänge, dem dritten Teilsignal die zweiten Wellenlänge und dem vierten Teilsignal die erste Wellenlänge.

Die Änderung der Zuweisung erfolgt somit derart, daß einem Teilsignal, das auf einer Wellenlänge mit einer hohen Ausbreitungsgeschwindigkeit empfangen wird, eine Wellenlänge mit einer niedrigen Ausbreitungsgeschwindigkeit zugewiesen wird und einem Teilsignal, das auf einer Wellenlänge mit einer niedrigen Ausbreitungsgeschwindigkeit empfangen wird, eine Wellenlänge mit einer hohen Ausbreitungsgeschwindigkeit zugewiesen wird.

Anstelle der Meßeinheit 6 kann auch ein Verwürfler vorgesehen sein, um die Zuweisung der Wellenlängen für jedes Teilsignal vor dessen Aussendung ohne vorherige Messung zu verändern.

Die Verwürfelung kann z.B. auf Grund von vorab bekannten statischen Ausbreitungsparameter erfolgen, die z.B. bei der Einmessung der Übertragungsstrecke oder mittels Testsignalen während des Betriebs ermittelt und abgespeichert wurden. Bei dieser Alternative wird keine Messung der Laufzeitunterschiede einzelner Teilsignale eines verketteten Signals benötigt. Alle Teilsignale, die auf der ersten Wellenlänge empfangen werden und zur Weiterleitung bestimmt sind, werden beispielsweise automatisch auf der vierten Wellenlänge wieder ausgesandt. Alternativ kann auch eine zufällige Verwürfelung der Wellenlängen auf die Teilsignale erfolgen. Bei dieser Alternative, die insbesondere bei sehr langen Übertragungsstrecken sinnvoll angewendet werden kann, mitteln sich die einzelnen Ausbreitungsgeschwindigkeiten auf Grund der Statistik. Die Sendeeinheit verfügt beispielweise über einen Zufallsgenerator, der die Wellenlänge bestimmt, über die ein Teilsignal übertragen wird.

Das zweite Ausführungsbeispiel wird nun unter Zuhilfenahme von Fig. 2 erläutert. Fig. 2 zeigt ein zweites erfindungsgemäßes Netzwerk.

Das Netzwerk beinhaltet vier Netzelemente 7, 8, 9, 10, die über optische Leitungen miteinander verbunden sind. Ferner ein zentrales, mit allen Netzelementen 7, 8, 9, 10 über elektrische Leitungen verbundenes Netzwerkmanagement 11.

Jedes Netzelement 7, 8, 9, 10 ist geeignet, unterschiedlichen Teilsignalen eines zu übertragenden, verketteten Signals unterschiedliche Wellenlängen zuzuweisen. Das Netzwerkmanagement 11 gibt die einzelnen Zuweisungen jedem Netzelement 7, 8, 9, 10 derart vor, daß die Laufzeitunterschiede der Teilsignale des verketteten Signals für einen vorbestimmten Empfangsort minimiert werden.

Im Netzwerkmanagement 11 sind in einer Variante statische Ausbreitungsparameter abgespeichert, die z.B. bei der Einmessung und/oder Inbetriebnahme ermittelt wurden. Das Netzwerkmanagement 11 beinhaltet eine Verarbeitungseinrichtung zur Berechnung der Zuweisungsvorgaben aus den abgespeicherten Werten.

Ein verkettetes Signal aus vier Teilsignalen kann über zwei verschiedene Pfade von Netzelement 7 zu Netzelement 9 übertragen werden. So können z.B. das erste und das vierte Teilsignal über die Teilstrecken Netzelement 7 Netzelement 8 Netzelement 9 und das zweite und das dritte Teilsignal über die Teilstrecken Netzelement 7 Netzelement 10 Netzelement 9 übertragen werden. Zusätzlich können die vier Teilsignal auf teils gleichen, teils unterschiedlichen Wellenlängen übertragen werden, das erste Teilsignal beispielsweise auf der ersten von vier Wellenlängen, das zweite Teilsignal ebenfalls auf der ersten von vier Wellenlängen, das dritte Teilsignal auf der vierten Wellenlänge und das vierte Teilsignal auf der dritten Wellenlänge. In den Netzelementen 8 und 10 kann die Zuweisung der Teilsignale zu den Wellenlängen gesteuert durch das Netzwerkmanagement 11 geändert werden. Auf Grund der unterschiedlichen Pfade mit in der Regel unterschiedlichen physikalischen Längen und der unterschiedlichen Wellenlängen können verstärkt unterschiedliche Laufzeitverzögerungen für die einzelnen Teilsignale eines verketteten Signals auftreten. Das zentrale Netzwerkmanagement 11 kann dann in einer weiteren Variante unter Kenntnis der ihm übermittelten, einzelnen Verzögerungen in den einzelnen Netzelementen 8, 9, 10 die optimalen Wellenlängenänderungen für die einzelnen Teilsignale berechnen und vorgeben.

Zusammenfassend schlägt die Erfindung somit ein Verfahren zum Übertragen eines verketteten Signals aus mindestens zwei Teilsignalen über ein optisches Netzwerk, das mindestens drei Netzelemente 1, 2, 3, 7, 8, 9, 10 beinhaltet, vor, bei dem mindestens zwei Teilsignale auf mindestens zwei unterschiedlichen Wellenlängen übertragen werden, und bei dem eine Zuweisung der Teilsignale zu den Wellenlängen für jeden Abschnitt zwischen zwei Netzelementen 1, 2, 3, 7, 8, 9, 10 derart erfolgt, daß die Laufzeitunterschiede zwischen den Teilsignalen für einen vorbestimmten Empfangsort minimiert werden.

In beiden Ausführungsbeispielen ist die Anzahl der Netzelemente beispielhaft gewählt. Es können beispielhaft auch tausend Netzelemente miteinander verschaltet sein. Auch ist die Topologie der Netzwerke beispielhaft. So können die Netzwerke als Punkt-zu-Punkt, Punkt-zu-Mehrpunkt, Maschennetz oder dergleichen ausgeführt sein. Die Netzwerke sind als unidirektionale Netzwerke dargestellt. Die Erfindung kann auch auf bidirektionale Netze angewendet werden, mit Änderung der Zuweisungen in nur einer oder in beide Richtungen.

Das Netzwerkmanagement des zweiten Ausführungsbeispiels kann auch anstatt über elektrische über optische Leitungen mit den Netzelementen verbunden sein.

Beide Ausführungsbeispiele können auch miteinander kombiniert werden.

## Patentansprüche

1. Verfahren zum Übertragen eines verketteten Signals aus mindestens zwei Teilsignalen über ein optisches Netzwerk, das mindestens drei Netzelemente (1, 2, 3, 7, 8, 9, 10) beinhaltet,
**dadurch gekennzeichnet,**
daß mindestens zwei Teilsignale auf mindestens zwei unterschiedlichen Wellenlängen übertragen werden, und daß eine Zuweisung der Teilsignale zu den Wellenlängen für jeden Abschnitt zwischen zwei Netzelementen (1, 2, 3, 7, 8, 9, 10) derart erfolgt, daß die Laufzeitunterschiede zwischen den Teilsignalen für einen vorbestimmten Empfangsort minimiert werden.

2. Netzelement (1, 2, 3, 7, 8, 9, 10) eines optischen Netzwerks zur Übertragung von verketteten Signalen,
**dadurch gekennzeichnet,**
daß das Netzelement (1, 2, 3, 7, 8, 9, 10) eine Empfangseinheit (4) zum Empfang von mindestens zwei Teilsignalen eines verketteten Signals auf mindestens zwei Wellenlängen beinhaltet, daß eine Meßeinheit (6) zur Messung der Laufzeitunterschiede zwischen den Teilsignalen des empfangenen, verketteten Signals vorgesehen ist, und daß eine Sendeeinheit (5) zur Aussendung des empfangenen, verketteten Signals vorgesehen ist, wobei die Sendeeinheit geeignet ist, vor der Aussendung eine Änderung der Zuweisung der Teilsignale zu den Wellenlängen vorzunehmen, für den Fall, daß mindestens ein gemessener Laufzeitunterschied eine vorgegebene Schwelle überschreitet.

3. Netzelement (1, 2, 3, 7, 8, 9, 10) nach Anspruch 2, dadurch gekennzeichnet, daß anstelle der Meßeinheit (6) ein Verwürfler vorgesehen ist, um die Zuweisung der Wellenlängen für jedes Teilsignal vor dessen Aussendung zu verändern.

4. Netzelement (1, 2, 3, 7, 8, 9, 10) nach Anspruch 2 oder 3, dadurch gekennzeichnet, daß die Änderung der Zuweisung derart erfolgt, daß einem Teilsignal, das auf einer Wellenlänge mit einer hohen Ausbreitungsgeschwindigkeit empfangen wird, eine Wellenlänge mit einer niedrigen Ausbreitungsgeschwindigkeit zugewiesen wird und einem Teilsignal, das auf einer Wellenlänge mit einer niedrigen Ausbreitungsgeschwindigkeit empfangen wird, eine Wellenlänge mit einer hohen Ausbreitungsgeschwindigkeit zugewiesen wird, eine Verwürfelung auf Grund von vorab bekannten statischen Ausbreitungsparametern oder einer zufälligen Verwürfelung der Teilsignale auf die Wellenlängen erfolgt.

5. Netzwerk mit mindestens drei Netzelementen (1, 2, 3, 7, 8, 9, 10) und einem mit allen Netzelementen (1, 2, 3, 7, 8, 9, 10) verbundenen Netzwerkmanagement (1 1),
**dadurch gekennzeichnet,**
daß jedes Netzelement (1, 2, 3, 7, 8, 9, 10) geeignet ist, unterschiedlichen Teilsignalen eines zu übertragenden, verketteten Signals unterschiedliche Wellenlängen zuzuweisen, und daß das Netzwerkmanagement (11) die einzelnen Zuweisungen jedem Netzelement (1, 2, 3, 7, 8, 9, 10) derart vorgibt, daß die Laufzeitunterschiede der Teilsignale des verketteten Signals für einen vorbestimmten Empfangsort minimiert werden.

6. Netzwerk nach Anspruch 5, dadurch gekennzeichnet, daß im Netzwerkmanagement (11) statische Ausbreitungsparameter abgespeichert sind, und daß das Netzwerkmanagement (11) eine Verarbeitungseinrichtung zur Berechnung der Zuweisungsvorgaben aus den abgespeicherten Werten beinhaltet.

7. Verfahren nach Anspruch 1, Netzelement (1, 2, 3, 7, 8, 9, 10) nach Anspruch 2 oder Netzwerk nach Anspruch 5, dadurch gekennzeichnet, daß mindestens ein Netzelement (1, 2, 3, 7, 8, 9, 10) als Zentrale, Empfänger, Cross-Connect, Add-Drop-Multiplexer oder als optischer Multiplexer ausgebildet ist.

8. Verfahren nach Anspruch 1, Netzelement (1, 2, 3, 7, 8, 9, 10) nach Anspruch 2 oder Netzwerk nach Anspruch 5, dadurch gekennzeichnet, daß mindestens ein Teilsignal als VC4 Container eines virtuell verketteten SDH-Signals ausgebildet ist.
